# EUROPÄISCHE PATENTANMELDUNG

(11) **EP 1 308 204 A1**
(43) Veröffentlichungstag der Anmeldung: **07.05.2003**
(21) Anmeldenummer: 01811058.5
(22) Anmeldetag: 31.10.2001
(51) Int. Cl.: B01J 19/32, B01J 35/06

(54) **Packungselement für einen katalytischen Reaktor oder eine Kolonne zur Dürchführung einer reaktiven thermischen Trennung**

(71) Anmelder: Sulzer Chemtech AG, 8404 Winterthur (CH)
(72) Erfinder: Moritz, Peter, Dr., 8542 Wiesendangen (CH); Mandic, Zdravko, 8400 Winterthur (CH); Götze, Lars, Dr., 8400 Winterthur (CH); Hasse, Hans, Dr., 67661 Kaiserslautern (DE)
(74) Vertreter: Sulzer Management AG

(57) **Zusammenfassung**

Das Packungselement (10) ist in einem katalytischen Reaktor (1) oder einer Kolonne zur Durchführung einer reaktiven thermischen Trennung einsetzbar. Es umfasst flächige Körper (2, 3), die Lagen mit Strömungskanälen bilden. Die Oberflächen der flächigen Körper sind zum Durchführen von katalytischen Reaktionen und zum Leiten eines fluiden, insbesondere flüssigen Mediums in Form von Rieselfilmen verwendbar. Die Strömungskanäle sind zum Führen eines weiteren fluiden, insbesondere gasförmigen Mediums vorgesehen. Die flächigen Körper bilden eine heterogene Struktur aus einerseits formstabilen Membranen (2) und andererseits textilen Flächen (3). Die textilen Flächen, die zumindest zu einem Teil Träger eines katalytisch wirksamen Stoffes sind, bestehen jeweils aus einem Fäden (4, 5) umfassenden Verbundkörper, dessen Fäden zumindest zu einem Teil Filamente und/oder lineare Verbundkörper sind. Jeder lineare Verbundkörper umfasst eine Mehrzahl von Fasern (41) oder Filamenten.

## Beschreibung

Die Erfindung betrifft ein Packungselement für einen katalytischen Reaktor oder eine Kolonne zur Durchführung einer reaktiven thermischen Trennung, nämlich ein Packungselement gemäss Oberbegriff von Anspruch 1. Die Erfindung bezieht sich auch auf einen Reaktor oder eine Kolonne mit solchen Packungselementen sowie auf eine Verwendung des Packungselements bzw. des Reaktors oder der Kolonne. Eine reaktive thermische Trennung findet beispielsweise bei einer Reaktivdestillation, bei einer Reaktivabsorption, in einem Bioreaktor (mit trägerfixierten Enzymen oder Mikroorganismen), in einem Biofilter oder in einem Bioabsorber statt. Die Begriffe "Katalysator" und "katalytisch" sind nachfolgend verallgemeinert zu verstehen, nämlich so, dass Enzyme oder Mikroorganismen auch als Katalysatoren anzusehen sind.

Aus der WO 99/07467 ist ein Reaktor mit einem Festbett bekannt, das Partikel mit katalytisch wirksamen Oberflächen enthält und das aus einer Trägerstruktur mit den in ihr eingelagerten katalytischen Partikeln besteht. Die Trägerstruktur ist beispielsweise eine geordnete Packung, die eine Vielzahl von Lagen mit Strömungskanälen umfasst, wobei jede Lage aus einem flächigen, netzartig strukturierten Körper ("mesh") besteht. Dieser flächige Körper weist eine hohe Porosität (> 45 %) auf, so dass Reaktanden aus den Strömungskanälen zu den katalytischen Partikeln ohne grosse Behinderung diffundieren können. Die Partikel können eine granulare oder faserige Form haben. Die Struktur, in die die Partikel eingelagert sind, besteht aus metallischen und/oder keramischen Fasern. Sie werden beispielsweise durch Sintern zu einem festen flächigen Körper zusammengefügt, der formstabil ist. Unter Formstabilität wird dabei verstanden, dass die Struktur bezüglich einer zu erwartenden mechanischen Belastung so widerstandsfähig ist, dass die Form der Struktur erhalten bleibt oder die Struktur nur geringfügig deformiert wird.

Als Katalysatoren verwendbare faserige Partikel - nachfolgend kurz als katalytische Fasern bezeichnet - können beispielsweise durch ein Spinnverfahren zu Fäden verbunden werden. Ein lockeres Bündel von solchen Fäden kann als Festbett für einen rohrförmigen Raktor verwendet werden. In einem derartigen Festbett ist eine Trägerstruktur durch die katalytischen Fasern selbst gebildet. Eine zusätzliche Trägerstruktur wie bei dem oben beschriebenen Festbettreaktor ist nicht erforderlich. Im Fadenbündel sind zwar kapillare Kanäle vorhanden; es fehlen jedoch Strömungskanäle, was bei grossen Festbetten nachteilig ist.

Aufgabe der Erfindung ist es, eine Packung oder ein Packungselement mit Strömungskanälen zu schaffen, in dem Fäden mit katalytisch wirksamen Oberflächen zusätzlich die Funktion von strukturbildenden Elementen haben. Die Fäden sind dabei filament- oder faserförmige Komponenten; oder sie enthalten solche Komponenten. (Unter Filamenten und Fasern werden hier Fadenelemente verstanden, die nicht aus mehreren Teilen zusammengesetzt sind, also beispielsweise nicht gesponnen sind, wobei die Filamente "endlos", d.h. beliebig lang sind, und die Fasern eine beschränkte Länge haben.) Ausserdem sollen die strukturbildenden Fäden selbst Komponenten von flächigen Körpern sein. Die genannte Aufgabe wird durch das im Anspruch 1 definierte Packungselement gelöst.

Das Packungselement ist in einem katalytischen Reaktor oder einer Kolonne zur Durchführung einer reaktiven thermischen Trennung einsetzbar. Es umfasst flächige Körper, die Lagen mit Strömungskanälen bilden. Die Oberflächen der flächigen Körper sind zum Durchführen von katalytischen Reaktionen und zum Leiten eines fluiden, insbesondere flüssigen Mediums in Form von Rieselfilmen verwendbar. Die Strömungskanäle sind zum Führen eines weiteren fluiden, insbesondere gasförmigen Mediums vorgesehen. Die flächigen Körper bilden eine heterogene Struktur aus einerseits formstabilen Membranen und andererseits textilen Flächen. Die textilen Flächen, die zumindest zu einem Teil Träger eines katalytisch wirksamen Stoffes sind, bestehen jeweils aus einem Fäden umfassenden Verbundkörper, dessen Fäden zumindest zu einem Teil Filamente und/oder lineare Verbundkörper sind. Jeder lineare Verbundkörper umfasst eine Mehrzahl von Fasern oder Filamenten.

Damit das erfindungsgemässe Packungselement für den angegebenen Zweck verwendbar ist, müssen die formstabilen Membranen ihre Form beibehalten, wenn mehrere Packungselemente aufeinander gestapelt werden. Diese Membranen haben also in der Regel zwei Funktionen: primär die Aufrechterhaltung der Struktur und zusätzlich - in der Regel - die Bereitstellung von Strömungskanälen. Dagegen ist es die primäre Funktion der textilen Flächen, katalytisch wirksame Oberflächen zur Verfügung zu stellen. Diese flächigen Körper mit katalytischer Funktion können aber auch zusätzlich die Funktionen der formstabilen Membranen haben, wobei allerdings eine Aufrechterhaltung der Struktur nur beschränkt und nur im Zusammenwirken mit den formstabilen Membranen vorgesehen ist.

Die abhängigen Ansprüche 2 bis 7 betreffen vorteilhafte Ausführungsformen des erfindungsgemässen Packungselements. Gegenstand von Anspruch 8 ist ein Reaktor oder eine Kolonne mit dem erfindungsgemässen Packungselement. Die Ansprüche 9 und 10 beziehen sich auf Verwendungen des erfindungsgemässen Packungselements zur Durchführung katalytischer Reaktionen ohne eine simultan stattfindende Destillation bzw. mit einer solchen ("Reaktivdestillation"). Die Verwendungen betreffen beispielsweise Hydrierungen, Oxidationen, Veresterungen, Veretherungen und Acetalisierungen.

Eine weitere, spezielle Verwendung ist eine Formaldehyd-Entfernung aus Abluft in einem Biofilter oder Bioabsorber. Es wird Formaldehyd in Wasser (Rieselfilm) absorbiert und anschliessend durch immobilisierte Mikroorganismen enzymatisch zu Methanol und Formiat umgesetzt. Diese Stoffe werden durch die Mikroorganismen, d.h. deren Metabolismus, abgebaut, wobei die beiden Stoffe als Kohlenstoff- und Energiequelle für den Metabolismus ausreichen. CO₂ wird als Abbauprodukt freigesetzt. (Eine besondere Sorte des Bakteriums Pseudomonas putida eignet sich als Mikroorganismus. Das Enzym Formaldehyd-Dismutase wirkt bei diesem mikrobilogischen Verfahren als Katalysator).

Nachfolgend wird die Erfindung anhand der Zeichnungen erläutert. Es zeigen:
- Fig. 1: Teil eines Reaktors oder einer Kolonne mit einer Packung, die aus erfindungsgemässen Packungselementen aufgebaut ist,
- Fig. 2: ausschnittsweise einen Längsschnitt durch das erfindungsgemässe Packungselement einer einfachen Ausführungsform - quer zu den Lagen geschnitten,
- Fig. 3: ein Stück einer textilen Fläche, die für ein erfindungsgemässes Packungselement verwendbar ist,
- Fig. 4: eine vereinfachte Darstellung des in Fig. 2 abgebildeten Längsschnitts,
- Fig. 5: einen Querschnitt durch eine Kolonne,
- Fig. 6, 7: Darstellungen, jener in Fig. 4 entsprechend, zu weiteren Ausführungsformen,
- Fig. 8: Mittel zum Halten der flächigen Körper des erfindungsgemässen Packungselements und
- Fig. 9: ein flächiger Körper mit Durchbrüchen.

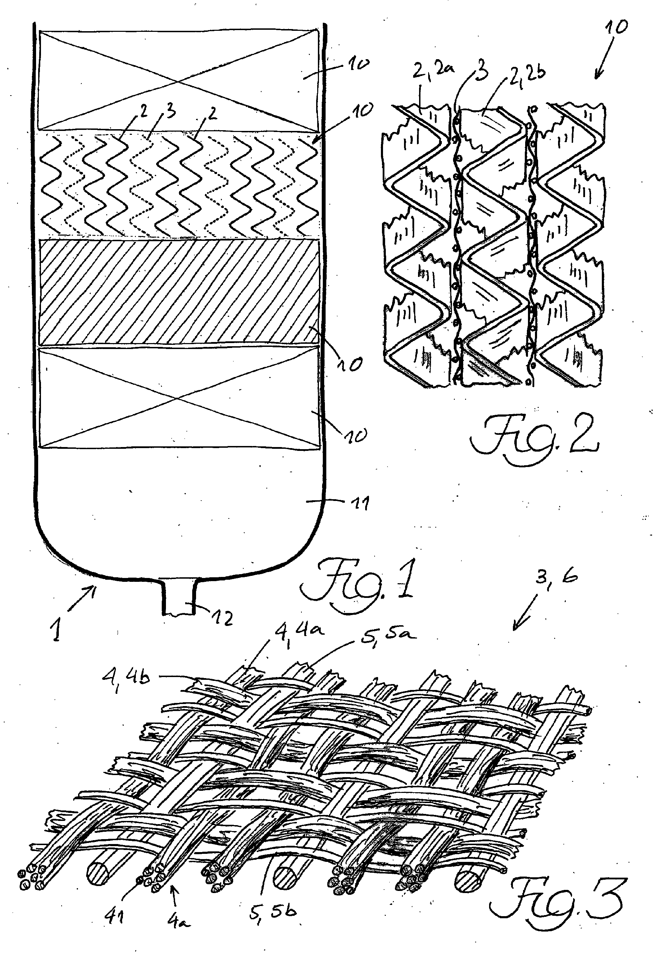

In der Fig. 1 ist der untere Teil eines katalytischen Reaktors 1 dargestellt, der eine aus erfindungsgemässen Packungselementen 10 bestehende Packung enthält. Der Reaktor 1 kann als eine Reaktivdestillationskolonne ausgebildet sein. Das Packungselement 10 setzt sich aus flächigen Körpern 2 und 3 zusammen, die eine heterogene Struktur aus einerseits formstabilen Membranen 2 und andererseits textilen Flächen 3 bilden. Benachbarte Packungselemente 10 sind bezüglich den Ausrichtungen der Lagen quer zu einander angeordnet. Aus einem Sumpf 11 und durch eine Leitung 12 lässt sich ein flüssiges Reaktionsmedium aus dem Reaktor 1 abführen.

Die textilen Flächen 3 sind zumindest zu einem Teil Träger eines katalytisch wirksamen Stoffes und bestehen jeweils aus einem Fäden umfassenden Verbundkörper, dessen Fäden zumindest zu einem Teil Filamente und/oder lineare Verbundkörper sind, wobei jeder lineare Verbundkörper eine Mehrzahl von Fasern oder Filamenten umfasst. Die textilen Flächen 3 sind beispielsweise Gewebe oder Vliesstoffe, in die zum Zweck einer Versteifung verformbare Metalldrähte eingearbeitet sein können. Die formstabilen Membranen 2 sind vorzugsweise metallische Folien oder Metallgewebe; sie können auch aus keramischem Material hergestellt sein.

Fig. 2 zeigt ausschnittsweise einen Längsschnitt durch das erfindungsgemässe Packungselement 10 einer Ausführungsform, die sich von jener der Fig. 1 unterscheidet und die sich sehr einfach lediglich mit plissierten formstabilen Membranen 2 und ebenen textilen Flächen 3 realisieren lässt. Durch die Plissierung bilden die formstabilen Membranen 2 eine Mehrzahl von Lagen mit Strömungskanälen, die gegen eine Hauptströmungsrichtung (Reaktorachse) geneigt sind. Die Strömungskanäle benachbarter Membranen 2a und 2b kreuzen sich.

Zwischen Bestandteilen von zwei fluiden Medien lassen sich im Reaktor 1 katalytisch beeinflusste Reaktionen durchführen, nämlich durch eine heterogene, auf den textilen Flächen 3 stattfindende Katalyse, wobei insbesondere eine gasförmige mit einer flüssigen Phase oder zwei flüssige Phasen miteinander in Kontakt gebracht werden. Die textilen Flächen 3, die eine grosse Reaktionsfläche zur Verfügung stellen, sind primär für die Katalyse vorgesehen. Es können aber auch die formstabilen Membranen 2 zusätzlich Träger von katalytisch wirksamen Stoffen sein.

Die Katalysatoren können in verschiedender Form aufgebracht werden. Es ist auch möglich, auf dem Trägermaterial Mikroorganismen, wie z.B. Bakterien, zu immobilisieren, in denen die gewünschten Umsetzungen ablaufen.

Die katalytischen Prozesse können mit Stoffaustauschprozessen einer simultan ablaufenden Destillation kombiniert sein (Reaktivdestillation), wobei die Destillation sich aufgrund einem Stoffaustausch zwischen Rieselfilmen auf den flächigen Körpern 2 und 3 und einer in den Strömungskanälen strömenden Dampfphase ergibt.

Mit Fig. 3 wird eine Illustration einer textilen Fläche 3 bzw. 6 gegeben, die für ein erfindungsgemässes Packungselement 10 verwendbar ist. Die textile Fläche 3, 6 ist aus Fäden 4 und 5 gewoben: Kettfäden 4a, 5a und Schussfäden 4b, 5b. In der textilen Fläche 6 sind die Fäden 4, 5 zu einem Teil verwebbare Metalldrähte, nämlich die Kettfäden 5a und die Schussfäden 5b. In der textilen Fläche 3 sind diese Fäden 5a und 5b nicht metallisch; sie bestehen beispielsweise ganz oder teilweise aus einem Polymer. Es sind Fäden folgender Art verwendbar:
a) Fäden 4, die aus katalytischen Fasern 41 mittels einem Spinnverfahren zu einem linearen Körper verbunden sind;
b) Fäden mit jeweils einem homogenen Kern, der von einem den Katalysator tragenden Randbereich ummantelt ist, wobei der Randbereich einlagig oder mehrlagig ausgebildet aus katalytischen Fasern zusammengesetzt sein kann (nicht dargestellt); oder
c) Filamente 5b, deren Durchmesser zumindest zu einem Teil Werte im Bereich von 3 bis 10 µm haben, wobei die Filamente 5b jeweils aus einem katalytisch wirksamen Stoff bestehen oder aus einem homogenen Kern und einem den Kern beschichtenden, den Katalysator tragenden Randbereich aufgebaut sind (nicht dargestellt). Ein solcher Kern kann beispielsweise aus Glas, insbesondere Quarzglas, Kohlenstoff oder einer metallischen Legierung bestehen, während der Filamentmantel ein poröses, anorganisches Material, beispielsweise Aluminiumoxid, oder organisches Material sein kann, wobei das organische Material in Form von Polymerfasern vorliegen kann.

Eine Polymerfaser kann z.B. auf Polyethylen (PE) basieren, wobei das PE durch Vinylgruppen (z.B. Styrol) funktionalisiert ist. Die Polymeroberfläche lässt sich zusätzlich katalytisch aktivieren. Zum Beispiel können durch eine Sulfonierung saure und damit katalytisch aktive Gruppen auf der Polymeroberfläche erzeugt werden. Die Polymerfaser kann für sauer katalysierte Reaktion (z.B. Veresterungen, Veretherungen) verwendet werden. Durch lonentausch können Metalle (z.B Edelmetalle) auf der Polymerfaser immobilisiert werden. Eine solche Polymerfaser kann für edelmetallkatalysierte Reaktionen (z.B Hydrierungen) eingesetzt werden.

Die Fäden können alle gleich sein und beispielsweise in einer Form verwoben sein, in der die Fäden zu einer Leinwandbindung verkreuzt sind. Es kann auch eine andere Fadenverkreuzung (Bindung) vorgesehen sein, beispielsweise die in Fig. 3 dargestellte. Die Fäden sollen relativ locker verwoben werden, so dass eine gute Zugänglichkeit zu den katalytisch wirksamen Oberflächen gegeben ist.

Fig. 4 zeigt eine vereinfachte Darstellung des in Fig. 2 abgebildeten Längsschnitts. Fig. 5 zeigt einen Querschnitt durch eine Kolonne 1, deren Packungselemente 10 eine Struktur gemäss Fig. 4 haben, wobei die textilen Flächen 3 eine zusammenhängende Tuchbahn 7 bilden, die mäandrisch zwischen die formstabilen Membranen 2 (nur angedeutet) eingelegt ist.

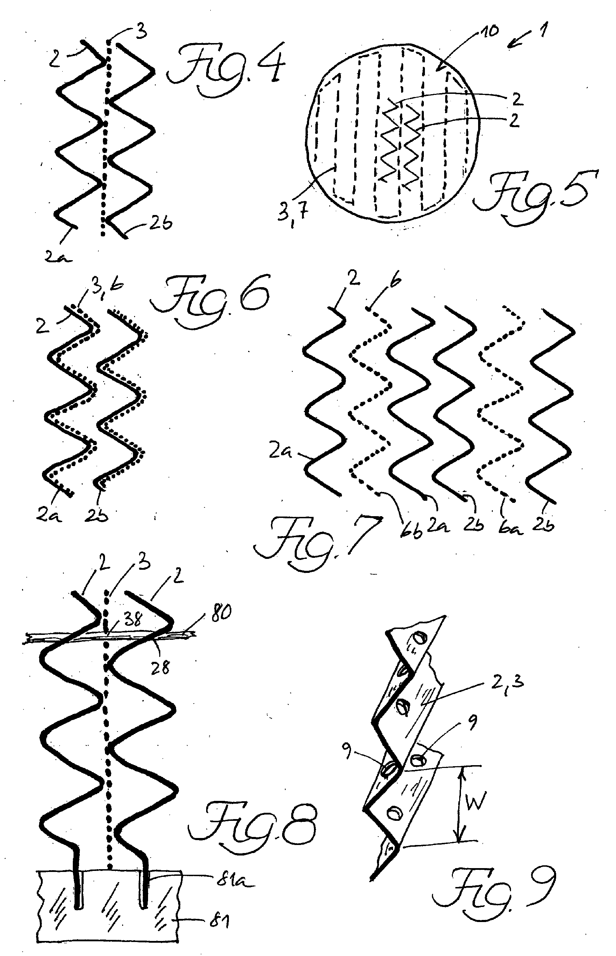

Die Figuren 6 und 7 stellen in der gleichen vereinfachten Weise wie Fig. 4 zwei weitere Ausführungsformen dar. In Fig. 6 werden die Strömungskanäle durch eine Plissierung der formstabilen Membranen 2 gebildet, auf denen weitgehend formschlüssig die textilen Flächen 3 in Form von plissierten Flächen aufgelegt sind, wobei diese Flächen 3 durch Metalldrähte verstärkte Flächen 6 sein können. Diese textilen Flächen 3 oder 6 können auch nur einen Teil der Membran 2 bedecken; oder sie können eine beidseitige Bedeckung der Membranen 2 bilden.

Ein Teil der Strömungskanäle kann auch durch eine Wellung oder Plissierung der textilen Flächen 6 gebildet sein, in die zur Versteifung und zur Erzeugung einer Formstabilität verformbare Metalldrähte eingearbeitet sind. Ein Beispiel ist in Fig. 7 gezeigt, mit plissierten textilen Flächen 6a und 6b, die eine beschränkte Formstabilität haben. Die Strömungskanäle der Flächen 6a, 6b haben die gleiche Neigung bezüglich der Hauptströmungsrichtung (positiv oder negativ) wie jene der Membranen 2a bzw. 2b. Diese Ausführungsform liegt auch bei den Packungselementen 10 der Fig. 1 vor.

In der Fig. 8 sind Mittel 80, 81 zum Halten der flächigen Körper 2 und 3 des erfindungsgemässen Packungselements 10 abgebildet: a) Drahtstifte 80, die durch entsprechende Durchbrüche 28, 38 der flächigen Körper 2, 3 durchgezogen sind und die an den randständigen Lagen des Packungselements 10 mit nicht dargestellten Elementen fixiert sind; b) Stege 81, mit schlitzförmigen Ausnehmungen 81 a, in die die formstabilen Membranen 2 an deren unteren (oder auch oberen) Rändern eingesetzt sind. Die textilen Flächen 3, eben oder plissiert, können ebenfalls auf entsprechende Weise im Steg 81 fixiert werden. Es können auch Schlitze in den flächigen Körpern 2, 3 vorgesehen sein, so dass beispielsweise deren unteren Ränder bis an die Unterkante der Stege 81 reichen. Die textilen Flächen 3 können in steife Rahmen eingespannt und Durchbrüche 28, 38 mit Ösen verstärkt sein.

Die Strömungskanäle, die durch eine Wellung oder Plissierung der flächigen Körper 2 und/oder 3 gebildet sind, weisen eine charakteristische Wellenlänge w auf: siehe Fig. 9. Es lässt sich mittels Durchbrüchen 9 ein konvektiver Stofftransport zwischen benachbarten Strömungskanälen innerhalb einer Packungslage ermöglichen. Die flächigen Körpern 2, 3 weisen zu diesem Zweck mit Vorteil Durchbrüche 9 auf, die weitgehend isodiametral sind und deren mittlerer Durchmesser in einem Bereich liegt, der grösser als 3 % und kleiner als 10 % der charakteristischen Wellenlänge w ist.

## Patentansprüche

1. Packungselement (10) für einen katalytischen Reaktor (1) oder eine Kolonne zur Durchführung einer reaktiven thermischen Trennung, mit flächigen Körpern (2, 3), die eine Mehrzahl von Lagen mit Strömungskanälen bilden, wobei die Oberflächen der flächigen Körper zum Durchführen von katalytischen Reaktionen und zum Leiten eines fluiden, insbesondere flüssigen Mediums in Form von Rieselfilmen verwendbar sind und die Strömungskanäle zum Führen eines weiteren fluiden, insbesondere gasförmigen Mediums vorgesehen sind, **dadurch gekennzeichnet, dass** die flächigen Körper eine heterogene Struktur aus einerseits formstabilen Membranen (2) und andererseits textilen Flächen (3) bilden und dass die textilen Flächen, die zumindest zu einem Teil Träger eines katalytisch wirksamen Stoffes sind, jeweils aus einem Fäden (4, 5) umfassenden Verbundkörper bestehen, dessen Fäden zumindest zu einem Teil Filamente und/oder lineare Verbundkörper sind, wobei jeder lineare Verbundkörper eine Mehrzahl von Fasern (41) oder Filamenten umfasst.

2. Packungselement nach Anspruch 1, **dadurch gekennzeichnet, dass** die Strömungskanäle durch die oder einen Teil der flächigen Körper (2, 3) gebildet sind, die eine Wellung oder Plissierung mit einer charakteristischen Wellenlänge w aufweisen, dass die textilen Flächen (3, 6) beispielsweise Gewebe oder Vliesstoffe sind, in die zum Zweck einer Versteifung verformbare Metalldrähte (5) eingearbeitet sein können, und dass die flächigen Körper Durchbrüche (9) aufweisen können, die weitgehend isodiametral sind und deren mittlerer Durchmesser vorzugsweise in einem Bereich liegt, der grösser als 3 % und kleiner als 10 % der charakteristischen Wellenlänge ist.

3. Packungselement nach Anspruch 2, **dadurch gekennzeichnet, dass** die Strömungskanäle benachbarter Lagen (2a, 2b) sich kreuzen.

4. Packungselement nach einem der Ansprüche 1 bis 3, **dadurch gekennzeichnet, dass** die formstabilen Membranen (2) metallische Folien oder Metallgewebe sind und die textilen Flächen (3) Fäden (4, 5) folgender Art enthalten:
a) Fäden, die aus Fasern (41) mittels einem Spinnverfahren zu einem linearen Körper verbunden sind;
b) Fäden mit jeweils einem homogenen Kern, der von einem den Katalysator tragenden Randbereich ummantelt ist, wobei der Randbereich einlagig oder mehrlagig ausgebildet aus Fasern zusammengesetzt sein kann; oder
c) Filamente, deren Durchmesser zumindest zu einem Teil Werte im Bereich von 3 bis 10 µm haben, wobei die Filamente jeweils aus einem katalytisch wirksamen Stoff bestehen oder aus einem homogenen Kern und einem den Kern beschichtenden, den Katalysator tragenden Randbereich aufgebaut sind und der Kern beispielsweise aus Glas, insbesondere Quarzglas, Kohlenstoff oder einer metallischen Legierung besteht, während der Filamentmantel ein poröses, anorganisches Material, beispielsweise Aluminiumoxid, oder organisches Material, insbesondere ein Polymer, sein kann.

5. Packungselement nach einem der Ansprüche 1 bis 4, **dadurch gekennzeichnet, dass** die Strömungskanäle durch die formstabilen Membranen (2) gebildet sind und die textilen Flächen (3) ebene Membranen zwischen den Strömungskanälen oder einem Teil der Strömungskanäle bilden.

6. Packungselement nach einem der Ansprüche 1 bis 4, **dadurch gekennzeichnet, dass** die Strömungskanäle durch die formstabilen Membranen (2) gebildet sind und dass einzelne oder alle Membranen weitgehend formschlüssig von jeweils mindestens einer der textilen Flächen (3, 6) bedeckt sind.

7. Packungselement nach einem der Ansprüche 1 bis 4, **dadurch gekennzeichnet, dass** ein Teil der Strömungskanäle durch eine Wellung oder Plissierung der textilen Flächen (6) gebildet sind, in die zur Versteifung und zur Erzeugung einer Formstabilität verformbare Metalldrähte (5) eingearbeitet sind.

8. Reaktor (1) oder Kolonne mit einem Packungselement oder mehreren Packungselementen (10) gemäss einem der Ansprüche 1 bis 7, wobei der Reaktor als Festbett- oder Rieselbettreaktor und die Kolonne als Reaktivdestillationskolonne ausgebildet sind.

9. Verwendung eines Packungselements (10) gemäss einem der Ansprüche 1 bis 7 oder eines Reaktors (1) bzw. einer Kolonne gemäss Anspruch 8 zum Durchführen von katalytisch beeinflussten Reaktionen zwischen Bestandteilen der fluiden Medien durch eine heterogene, auf den textilen Flächen (3) stattfindenden Katalyse, wobei insbesondere eine gasförmige mit einer flüssigen Phase oder zwei flüssige Phasen miteinander in Kontakt gebracht werden und beispielsweise Hydrierungen, Oxidationen, Veresterungen, Veretherungen oder Acetalisierungen durchgeführt werden oder beispielsweise Formaldehyd aus Abluft entfernt wird.

10. Verwendung nach Anspruch 9, **dadurch gekennzeichnet, dass** die katalytischen Prozesse mit Stoffaustauschprozessen einer simultan ablaufenden Destillation kombiniert sind, wobei die Destillation sich mittels einem Stoffaustausch zwischen Rieselfilmen auf den flächigen Körpern (2, 3) und einer Dampfphase ergibt.
